(19) Europäisches Patentamt
European Patent Office
Office européen des brevets

(11) **EP 3 414 537 B1**

(12) **EUROPEAN PATENT SPECIFICATION**

(45) Date of publication and mention
of the grant of the patent:
**30.07.2025 Bulletin 2025/31**

(21) Application number: **16889736.1**

(22) Date of filing: **11.02.2016**

(51) International Patent Classification (IPC):
**G01J 3/28** *(2006.01)*     **G01J 3/02** *(2006.01)*
**G01J 3/36** *(2006.01)*     **G01J 5/52** *(2022.01)*
**G01J 3/12** *(2006.01)*

(52) Cooperative Patent Classification (CPC):
**G01J 3/28; G01J 3/0205; G01J 3/0208;
G01J 3/0286; G01J 3/0289; G01J 3/108;
G01J 3/36; G01J 5/53; G01J 5/80;**
G01J 2003/1213; G01J 2003/2866;
G01J 2003/2869

(86) International application number:
**PCT/IL2016/050166**

(87) International publication number:
**WO 2017/137970 (17.08.2017 Gazette 2017/33)**

(54) **DUAL SPECTRAL IMAGER WITH NO MOVING PARTS AND DRIFT CORRECTION METHOD THEREOF**

DOPPELTER SPEKTRALER BILDERZEUGER OHNE BEWEGTE TEILE UND DRIFTKORREKTURVERFAHREN DAFÜR

IMAGEUR À DOUBLE SPECTRE SANS PARTIE MOBILE ET SON PROCÉDÉ DE CORRECTION DE DÉRIVE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.12.2018 Bulletin 2018/51**

(73) Proprietor: **CI Systems (Israel) LTD.
10551 Migdal Ha'Emek (IL)**

(72) Inventors:
• **CABIB, Dario
3657600 Timrat (IL)**

• **LAVI, Moshe
3600100 Nofit (IL)**
• **SINGHER, Liviu
36066 Kiryat Tivon (IL)**

(74) Representative: **Kancelaria Eupatent.pl Sp. z.o.o
Ul. Kilinskiego 185
90-348 Lodz (PL)**

(56) References cited:
**US-A- 5 729 011        US-A1- 2001 045 516
US-A1- 2005 263 682     US-A1- 2005 263 682
US-A1- 2008 180 789     US-A1- 2011 002 505
US-A1- 2014 354 802     US-B1- 6 249 374**

**Description**

TECHNICAL FIELD

The present invention relates to the detection and imaging of infrared radiation.

BACKGROUND OF THE INVENTION

In order to detect and image gas clouds, especially through the use of infrared detection systems over a wide spectral range, it is often necessary to spectrally limit the incoming radiation to selected wavelength bands using spectral filtering techniques. This is accomplished by measuring the radiation emitted by a background of the gas cloud in two different wavelength bands, one which is absorbed by the gas cloud, and one which is not absorbed by the gas cloud. Devices which can detect and image gas clouds have a wide range of applications, such as, for example, constant monitoring of a scene in industrial installations and facilities for gas leakages, and identifying escaping gases from gas transporting vehicles subsequent to traffic accidents. Typically, detectors which detect radiation in the visible spectral range are of lower cost than infrared detectors. However, since most hazardous gases of interest lack colors in the visible spectral range, such devices must use higher cost infrared detectors. Typically, the least expensive infrared imaging detectors relevant for such applications are uncooled detectors, such microbolemter type arrays.

For some of the above applications, for example when the device must provide an alarm at cloud concentrations and size combinations above predetermined thresholds, quantitative data are required. To this end, these devices must use at least two spectral filters for filtering two selected wavelength bands, radiation in one wavelength band which is absorbed by the gas, and radiation in the other wavelength band which is not absorbed by the gas. The radiation in each wavelength band is imaged and analyzed separately. Device calibration methods and mathematical algorithms can be used to subsequently transform this quantitative data into scenes where the cloud image (when present) is shown, and where the quantitative information on the optical density of the specific gas of interest is stored pixel by pixel. Such a double filtering configuration is necessary in order to take into account contributions to the signals due to background infrared self-emission and drifts thereof brought about by background temperature drifts. This double filtering can be achieved with a spectral scanning method in which there is movement of an optical component of the device, such as, for example, an interferometer, a set of band pass filters mounted on a rotating wheel, or a scanning mirror to gather spectral information. Devices based on uncooled detectors must be designed with a large focusing lens numerical aperture (low f-number) in order to increase detector sensitivity to the radiation of interest relative to environment radiation.

This is due to the fact that such detectors have a wide field of view. Designing an optical system with such a low f-number can be achieved with the above mentioned moving components. However, movements of optical components cause decreased system reliability, thereby increasing maintenance and operating cost of the device. In order to reduce maintenance and cost, filtering techniques can be implemented without moving parts via prisms, beam splitters, or beam combiners. However, such techniques have the effect of decreasing the focusing lens numerical aperture, thereby decreasing the sensitivity of the system to the radiation of the scene of interest relative to the environment radiation.

Furthermore, such infrared imaging devices based on uncooled microbolometer detectors can be used to quantitatively measure the radiance of each pixel of a scene only if the environment radiation changes (due mainly to environment temperature changes) contributing to the detector signals, can be monitored and corrected for. This is due to the fact that a quantitative measurement of infrared radiation from a scene is based on a mathematical relation between the detector signal and the radiation to be measured. This relation depends on the environment state during the measurement, and therefore the quantitative scene measurement can be done only if the environment state, and how the environment state affects that relation, is known during the measurement. The environment radiation sensed by the detector elements originates mainly from the optics and enclosures of the imaging device (besides the scene pixel to be monitored), and is a direct function of the environment temperature. If this radiation changes in time, it causes a drift in the signal, which changes its relation to the corresponding scene radiation to be measured and introduces inaccuracy.

This resulting inaccuracy prevents the use of such devices, especially in situations where they have to provide quantitative information on the gas to be monitored and have to be used unattended for monitoring purposes over extended periods of time, such as, for example, for the monitoring of a scene in industrial installations and facilities.

One known method for performing drift corrections is referred to as Non-Uniformity Correction (NUC). NUC corrects for detector electronic offset and partially corrects for detector case temperature drifts by the frequent use of an opening and closing shutter which is provided by the camera manufacturer. This NUC procedure is well known and widely employed in instruments based on microbolometer detectors. The shutter used for NUC is a moving part and therefore it is desirable to reduce the number of openings and closings of such a component when monitoring for gas leakages in large installations, requiring the instrument to be used twenty-four hours a day for several years without maintenance or recalibration. Frequent opening and closing of the shutter (which is usually done every few minutes or hours) requires high maintenance expenses.

To reduce the amount of shutter operations when using NUC techniques, methods for correcting for signal drift due to detector case temperature changes occurring between successive shutter openings have been developed by detector manufacturers, referred to as blind pixel methods. Known blind pixel methods rely on several elements of the detector array of the imaging device being exposed only to a blackbody radiation source placed in the detector case, and not to the scene radiation (i.e. being blind to the scene). However, such methods can only account and compensate for environmental temperature changes originating near and from the enclosure of the detector array itself, and not for changes originating near the optics or the enclosures of the imaging device. This is because in general there are gradients of temperature between the detector case and the rest of the optics and device enclosure. Therefore, known blind pixel methods may not satisfactorily compensate for environment radiation changes in imaging devices with large and/or complex optics, such as, for example, optics with wedges for directing and imaging radiation onto a detector through an objective lens system, as described below.

Examples of the prior art can be found in patent documents US20110002505, US20010045516 and US20050263682.

SUMMARY OF THE INVENTION

The present invention is a device and method for simultaneously detecting and imaging infrared radiation in at least two wavelength bands, and for correcting for signal drift as a result of the changing environment. The device and method avoids the use of moving parts, for higher reliability, without appreciably compromising on high numerical aperture (low optical f-number) for high sensitivity, and still using lower cost uncooled imaging detectors.

According to an embodiment of the present invention there is provided, a device for imaging radiation from a scene as recited in claim 1.

Optionally, each of the first and second filters is a band pass filter.

Optionally, the first filter is disposed on one of a first surface or a second surface of the first wedge shaped component, and the second filter is disposed on one of a first surface or a second surface of the second wedge shaped component.

Optionally, the first surface of the first wedge-shaped component is a closest surface of the first wedge-shaped component to the image forming optical component, and the first surface of the second wedge-shaped component is a closest surface of the second wedge-shaped component to the image forming optical component, and the second surface of the first wedge-shaped component is a closest surface of the first wedge-shaped component to the scene, and the second surface of the second wedge-shaped component is a closest surface of the second wedge-shaped component to the scene.

Optionally, an antireflective material is disposed on at least one of a first surface and a second surface of the first wedge-shaped component, and on at least one of a first surface and a second surface of the second wedge shaped component.

Optionally, the first and second wedge-shaped components are substantially symmetrically disposed relative to an optical path of radiation.

Optionally, each of the first and second wedge-shaped components is oriented at a respective angle relative to an optical path of radiation from the scene to the detector.

Optionally, the presence of the first and second wedge-shaped components results in a vertical field of view approximately halved with respect to a field of view of the device defined by the image forming optical component.

There is also provided according to an example embodiment of the teachings of the present invention, a method for imaging radiation from a scene, the radiation including at least a first and second wavelength band, the method comprising: (a) fixedly positioning a first and a second substantially wedge-shaped component at a distance from an image forming optical component; (b) directing radiation from a field of view of the scene by the first wedge-shaped component through the image forming optical component onto a first region of an uncooled detector; (c) filtering the directed radiation by the first wedge-shaped component to allow radiation in the first wavelength band to be imaged on the first region of the detector; (d) directing radiation from the field of view of the scene by the second wedge-shaped component through an image forming optical component onto a second region of the detector, the first and second regions of the detector being separate; (e) filtering the directed radiation by the second wedge-shaped component to allow radiation in the second wavelength band to be imaged on the second region of the detector; and (f) imaging the radiation from the field of view of the scene onto the detector, the distance from the image forming optical component being such that the radiation is imaged separately onto the first and second regions of the detector through an f-number less than approximately 1.5, and the imaged radiation on each of the regions of the detector including radiation in one respective wavelength band.

Optionally, the method further comprises: (g) orienting each of the first and second wedge-shaped components at a respective angle relative to an optical path of radiation from the scene to the detector.

Optionally, the method further comprises: (g) disposing an antireflective material on at least one of a first surface and a second surface of the first wedge-shaped component, and on at least one of a first surface and a second surface of the second wedge-shaped component.

Optionally, the method further comprises: (g) fixedly positioning a first filter component to allow radiation in the first wavelength band to be imaged on the first region of the detector; and (h) fixedly positioning a second filter component to allow radiation in the second wavelength band to be imaged on the second region of the detector.

Optionally, the fixedly positioning of the first filter comprises: (i) disposing the first filter on one of a first surface or a second surface of the first wedge-shaped component, and the fixedly positioning of the second filter comprises: (i) disposing the second filter on one of a first surface or a second surface of the second wedge-shaped component.

There is also provided according to an example of the teachings of the present invention, a method for reducing drift induced by a changing environment feature when imaging radiation from a scene, the radiation from the scene including at least a first and second wavelength band in the long wave infrared region of the electromagnetic spectrum, the method comprising: (a) focusing radiation from the scene by a first and second substantially wedge-shaped component through an image forming optical component onto a detector sensitive to radiation in the first and second wavelength bands, the detector being uncooled and including a separate first, second, and third detector region, the first and second wedge-shaped components positioned at a distance from the image forming optical component such that the radiation is imaged separately onto the first and second detector regions through an f-number less than approximately 1.5, and each of the wedge-shaped components transmitting radiation substantially in one respective wavelength band, and the imaged radiation on each of the first and second detector regions including radiation in one respective wavelength band, the imaged radiation on the first and second detector regions producing at least a first pixel signal; (b) projecting radiation from a radiation source by at least one of the first or second wedge-shaped components through the image forming optical component onto the third detector region to produce a second pixel signal, the radiation source different from the scene, and the radiation source projected continuously onto the third detector region over the duration for which the radiation from the scene is focused onto the first and second detector regions; and (c) modifying the first pixel signal based in part on a predetermined function to produce a modified pixel signal, the predetermined function defining a relationship between a change in the second pixel signal and a change in the first pixel signal induced by the changing environment feature.

Optionally, the image forming optical component and the first and second wedge-shaped components are positioned within a first enclosure volume, and the method further comprises: (d) positioning the radiation source proximate to the first enclosure volume.

Optionally, the image forming optical component and the first and second wedge-shaped components are positioned within a first enclosure volume, and at least a portion of the first enclosure volume is positioned within a second enclosure volume, and the method further comprises: (d) positioning the radiation source within the second enclosure volume and outside of the first enclosure volume.

Optionally, the method further comprises: (d) determining the change in the first pixel signal induced by the changing environment feature based on the predetermined function, and the modified pixel signal is produced by subtracting the determined change in the first pixel signal from the first pixel signal.

Optionally, the predetermined function is a correlation between the second pixel signal and the change in the first pixel signal induced by the changing environment feature.

Optionally, the method further comprises: (d) determining the correlation, the determining of the correlation being performed prior to performing (a).

Optionally, the radiation source is a blackbody radiation source, and the image forming optical component and the first and second wedge-shaped components are positioned within a first enclosure volume, and the detector and the first enclosure volume are positioned within a chamber having an adjustable chamber temperature, and a verification of the correlation is determined by: (i) measuring a first temperature of the blackbody radiation source at a first chamber temperature and measuring a subsequent temperature of the blackbody radiation source at a subsequent chamber temperature, the first and subsequent temperatures of the blackbody radiation source defining a first set; (ii) measuring a first reading of the second pixel signal at the first chamber temperature and measuring a subsequent reading of the second pixel signal at the subsequent chamber temperature, the first and subsequent readings of the pixel signal defining a second set; and (iii) verifying a correlation between the first and second sets.

Optionally, the radiation source is a blackbody radiation source, and the image forming optical component and the first and second wedge-shaped components are positioned within a first enclosure volume, and the detector and the first enclosure volume are positioned within a chamber having an adjustable chamber temperature, and a determination of the correlation includes: (i) measuring a first reading of the first pixel signal at a first chamber temperature and measuring a subsequent reading of the first pixel signal at a subsequent chamber temperature; (ii) subtracting the first reading of the first pixel signal from the subsequent reading of the first pixel signal to define a first set; and (iii) measuring a first reading of the second pixel signal at the first chamber temperature and measuring a subsequent reading of the second pixel signal at the subsequent chamber temperature, the first and subsequent readings of the second pixel signal defining a second set.

Optionally, the modifying of the first pixel signal includes: (i) measuring a first reading of the first pixel signal at a first time instance and measuring a subsequent reading of the first pixel signal at a subsequent time instance; (ii) measuring a first reading of the second pixel signal at the first time instance and measuring a subsequent reading of the second pixel signal at the subsequent time instance; and (iii) subtracting the first reading of the blind pixel signal from the subsequent reading of the blind pixel signal to define a third set.

Optionally, the modifying of the first pixel signal further includes: (iv) modifying the subsequent reading of the first pixel signal based on the third set in accordance with a correlation between the first and second sets.

Optionally, the determination of the correlation further includes: (iv) displaying the first set as a function of the second set.

Optionally, the determination of the correlation further includes: (iv) displaying the first set as a function of a third set, the third set being defined by the first chamber temperature and the subsequent chamber temperature.

There is also provided according to an example of the teachings of the present invention, a device for reducing a drift induced by a changing environment feature when imaging radiation from a scene, the radiation from the scene including at least a first and second wavelength band in the long wave infrared region of the electromagnetic spectrum, the device comprising: (a) a radiation source, the radiation source different from the scene; (b) a detector of the radiation from the scene and of radiation from the radiation source, the detector being uncooled and sensitive to radiation in the first and second wavelength bands, and the detector including a separate first, second, and third detector region; (c) a first and a second filter, the first filter associated with the first detector region for allowing radiation in the first wavelength band to be imaged on the first detector region, the second filter associated with the second detector region for allowing radiation in the second wavelength band to be imaged on the second detector region; (d) an optical system for continuously focusing the radiation from the scene and the radiation source onto the detector, the optical system comprising: (i) an image forming optical component for forming an image of the scene on the detector and for projecting radiation from the radiation source onto the third detector region, and (ii) a first and a second substantially wedge-shaped component, the first wedge-shaped component associated with the first filter, the second wedge-shaped component associated with the second filter, each of the wedge-shaped components fixedly positioned at a distance from the image forming optical component, each of the wedge-shaped components directing radiation from a field of view of the scene through the image forming optical component onto the detector, such that the radiation is imaged separately onto the first and second detector regions through an f-number of the optical system of less than approximately 1.5, the imaged radiation on each of the detector regions including radiation in one respective wavelength band, and at least one of the first or second wedge-shaped components projecting radiation from the radiation source through the image forming optical component onto the third detector region; and the device further comprising (e) electronic circuitry configured to: (i) produce at least a first pixel signal from the imaged radiation on the first and second detector regions; (ii) produce a second pixel signal from the radiation source projected by the optical system onto the third detector region, and (iii) modify the first pixel signal according to a predetermined function to produce a modified pixel signal, the predetermined function defining a relationship between a change in the second pixel signal and a change in the first pixel signal induced by the changing environment feature.

Optionally, the electronic circuitry is further configured to: (iv) determine the change in the first pixel signal induced by the changing environment feature based on the predetermined function; and (v) subtract the determined change in the first pixel signal from the first pixel signal.

Optionally, the radiation source is a blackbody radiation source.

Optionally, the radiation from the radiation source is directed by only one of the first and second wedge-shaped components through the image forming optical component onto the third detector region.

Optionally, the device further comprises: (f) a first enclosure volume. the optical system being positioned within the first enclosure volume.

Optionally, the radiation source is positioned proximate to the first enclosure volume.

Optionally, the device further comprises: (g) a second enclosure volume, at least a portion of the first enclosure volume being positioned within the second enclosure volume, and the radiation source being positioned within the second enclosure volume and outside of the first enclosure volume.

BRIEF DESCRIPTION OF THE DRAWINGS

The invention is herein described, by way of example only, with reference to the accompanying drawings, wherein:

FIG. 1 is a schematic side view illustrating a device for imaging radiation from a scene according to an embodiment of the invention;

FIG. 2 is a schematic side view illustrating the traversal of incident rays from the scene and scene background through the device according to an embodiment of the invention;

FIGS. 3A-3B are schematic illustrations showing filtering alternatives of the device according to an embodiment of the invention;

FIG. 4 is a schematic front view illustrating a detector and the resulting image formed on the detector, according to an embodiment of the invention.

FIG. 5 is a schematic side view illustrating a device for drift correction according to an embodiment of the invention;

FIG. 6A is a schematic front view illustrating a detector array of the device of FIG. 5;

FIG. 6B is a schematic front view illustrating blind pixels and imaged pixels according to an embodiment of the invention;

FIG. 7 is a block diagram of image acquisition electronics coupled to a detector array according to an embodiment of the invention;

FIG. 8 is a flowchart for verifying a correlation according to an embodiment of the invention;

FIG. 9 is a flowchart for determining a correlation according to an embodiment of the invention;

FIG. 10 is flowchart for correcting for drift according to an embodiment of the invention.

FIGS. 11A and 11B show examples of plots used for performing steps of the flowchart of FIG. 8.

## DESCRIPTION OF THE PREFERRED EMBODIMENTS

The present invention is a device for detecting and imaging infrared radiation in at least two wavelength bands on two separate regions of a detector, and for correcting for signal drift as a result of the changing environment.

The principles and operation of the device according to the present invention may be better understood with reference to the drawings and the accompanying description.

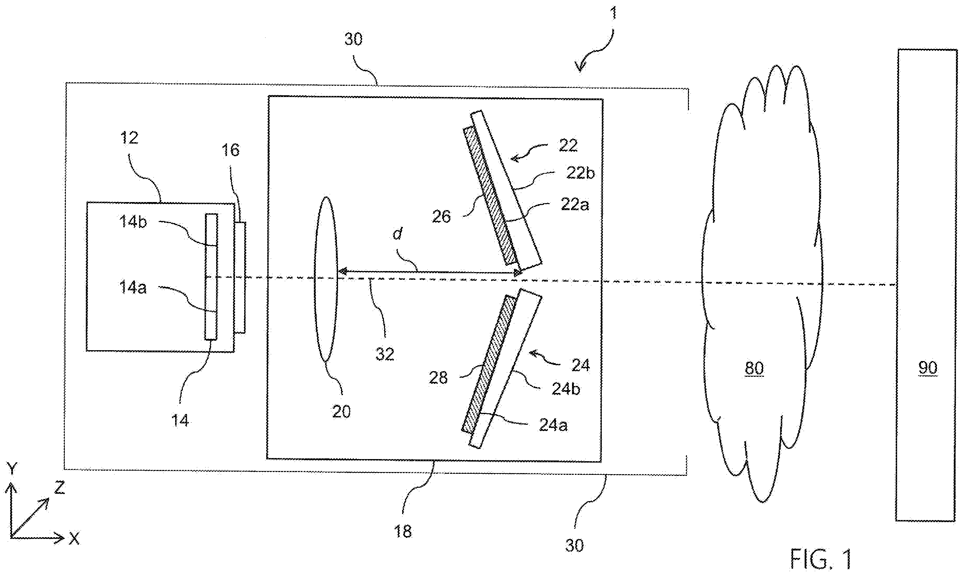

Referring now to the drawings, Figure 1 shows a schematic illustration of an embodiment of a device **1** for imaging a scene **80,** such as a gas cloud, in the infrared region of the electromagnetic spectrum, most preferably the Long-Wave Infrared (LWIR) region of the electromagnetic spectrum. When imaging such a scene, the device used for imaging the scene **80** is preferably positioned such that the scene **80** is interposed between the device **1** and a radiation emitting background **90,** such as, for example, a collection of objects (such as pipes and walls), the horizon, the sky or any other suitable background. Infrared radiation in at least two wavelength bands, a first wavelength band $\lambda_G$ and a second wavelength band $\lambda_N$, is emitted from the background. The characteristics of the scene **80** are such that it is absorbent, at least in part, and emitting of radiation in one of the wavelength bands and non-absorbent (and therefore non-emitting) of radiation in the other wavelength band. For example, the scene **80** may be absorbent and emitting of radiation in the first wavelength band ($\lambda_G$) and non-absorbent and non-emitting of radiation in the second wavelength band ($\lambda_N$). As a result, data acquired through a filter approximately centered about $\lambda_G$ includes information about both the gas presence and the background emission. Similarly, data acquired through a filter approximately centered about $\lambda_N$ includes information about the background emission, but does not include information about the gas presence. The algorithms mentioned above subsequently extract relevant gas cloud information from the acquired data.

The imaging itself is done by an infrared detector array **14**. The detector array **14** is an uncooled detector array, such as, for example, a microbolometer type array. The detector array **14** may be positioned within a detector case **12** positioned within the device **1**. Radiation from the scene **80** and the background **90** is focused onto the detector array **14** through a window **16** by collection optics **18** whose optical components are represented symbolically in Figure 1 by objective lens **20** and first and second wedge-shaped components **22** and **24**. Note that "objective lens" **20** may actually be a set of one or more lenses that is represented in Figure 1 by a single lens. The collection optics **18** can be considered as an enclosure volume for maintaining the position and the orientation of the optical components. The device **1** can be considered as an enclosure volume, defined by internal walls **30,** for maintaining the position and orientation of the collection optics **18** and the detector array **14**. The window **16** and the objective lens **20** are preferably made of materials, such as, for example, germanium, silicon, zinc sulfide or zinc selenide, which are transparent in the infrared region.

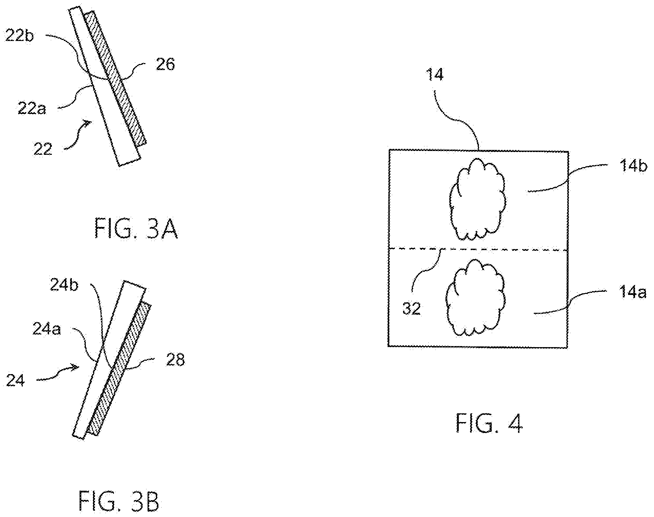

The wedge-shaped components **22** and **24** are preferably implemented as transmitting plates which are transmissive to the wavelength bands of the infrared radiation from the scene **80** and the background **90.** The objective lens **20** focuses radiation deflected by the wedge-shaped components **22** and **24** on the detector array **14** to form two simultaneous and separate images of the scene **80** on the background **90,** each image being formed on one half of the detector surface, as shown in Figure 4.

For clarity of illustration, the image acquisition electronics associated with the detector array **14** are not shown in Figure 1.

The detector array **14** is divided into two non-overlapping regions, a first detector region **14a** and a second detector region **14b.** As should be apparent, each of the detector regions preferably includes a plurality of detector elements (not shown) corresponding to individual pixels of the imaged scene. The detector array **14** is divided into the two equal aforementioned regions by a dividing plane **32** in Figure 1, perpendicular to the detector surface and to the plane of the page, represented by the line **32** in Figure 4. The optical axis of the collection optics **18** lies in the dividing plane **32.**

In a non-limiting example, Figure 1 includes the Cartesian coordinate system XYZ. In the non-limiting exemplary representation of the coordinate system XYZ in Figure 1, the detector plane is parallel to the YZ plane. Accordingly, the dividing plane **32** is parallel to the XZ plane and the optical axis is parallel to the X-axis. The wedge-shaped components **22** and **24** are wedge-shaped in the XY plane. Continued reference will be made to the non-limiting exemplary representation of the coordinate system XYZ in Figure 1 throughout this description. A front view of the detector plane and scene images is depicted in Figure 4.

The optical components of the collection optics **18** are arranged such that the numerical aperture of the collection optics **18** at the detector array **14** is effectively large. Having a large numerical aperture provides higher sensitivity of the detector array **14** to the radiation from the scene **80,** and less sensitivity to radiation originating from within the internal walls **30** of the device **1,** the collection optics **18,** and the optical components themselves. Optical systems having a large numerical aperture have a correspondingly small f-number (defined as the ratio between the focal length and the aperture diameter of the optical system) at the detector. As will be discussed, the position of the wedge-shaped components **22** and **24** along the optical axis **32** relative to the objective lens **20** provides a numerical aperture of at least 1/3, corresponding to an f-number of less than 1.5 at the detector array **14.**

As will be detailed below, the components of the device **1** to be discussed are placed in the device 1 in a fixed position and are not movable, thereby attaining the above mentioned f-number and numerical aperture bounds with no moving parts.

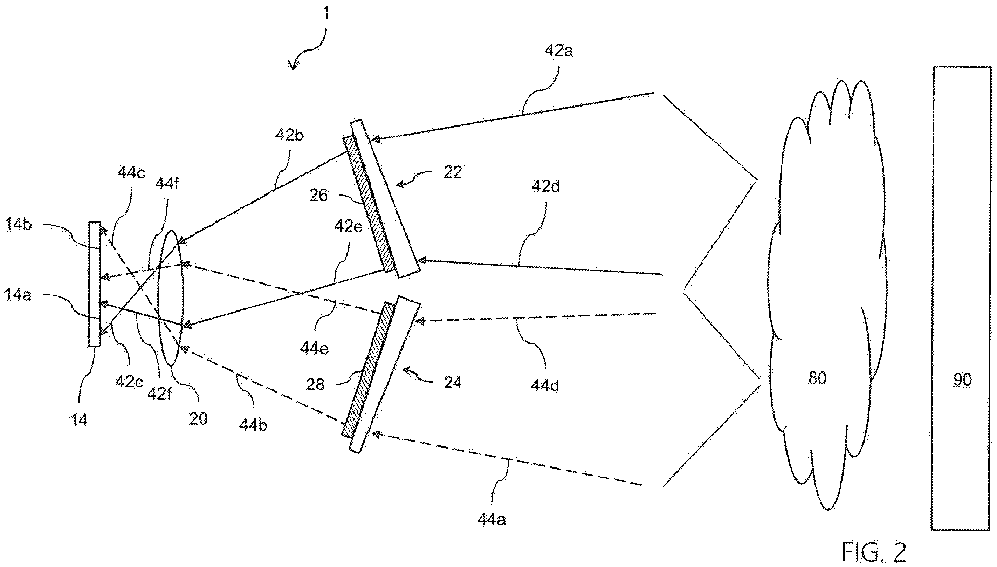

Refer now to Figure 2, the traversal of incident rays from the scene **80** and the background **90** to the detector array **14.** For clarity of illustration, the internal walls **30,** the collection optics **18,** the detector case **12,** and the window **16** are not shown in Figure 2.

The broken line between the scene **80** and the device **1** signifies that the distance between the scene **80** and the device **1** as depicted in Figure 2 is not to scale. In general, the distance between the scene **80** and the device **1** is much larger than the size of the device **1** itself, and is typically on the order of tens or hundreds of meters. Additionally, the broken line signifies that the two bundles of rays **42a, 42d** and **44a, 44d** both originate from the entire scene and not from one half of the scene.

With continued reference to Figure 2, incident ray **42a** is deflected by the first wedge-shaped component **22** resulting in a deflected ray **42b.** The deflected ray **42b** is focused by the objective lens **20** resulting in a focused ray **42c** which is imaged on the first detector region **14a.** For clarity of illustration, the rays **42a-42d** are represented by continuous lines in Figure 2. Similarly, incident ray **44a** is deflected by the second wedge-shaped component **24** resulting in a deflected ray **44b.** The deflected ray **44b** is focused by the objective lens **20** resulting in a focused ray **44c** which is imaged on the second detector region **14b.** For clarity of illustration, the rays **44a-44d** are represented by dashed lines in Figure 2.

Note that although only four incident rays **42a, 42d** and **44a, 44d** are depicted in Figure 2 (these are the marginal rays which define the field of view of the device in the plane of the cross section defined by the plane of the paper (XY plane)), it should be apparent that additional similar incident rays originating from the scene **80** are present and follow a path of traversal similar to the rays as described above. As such, reference to the incident rays **42a, 42d** and **44a, 44d** implicitly applies to all such similar incident rays originating from the scene 80 within the field of view.

Note that the incident rays **42a** and **44d** are parallel to each other, as are the incident rays **42d** and **44a.** Such a parallel relationship exists for additional pairs of incident rays (not shown) in which each ray of the pair is part of a different bundle. The parallel relationship is a result of each pair of incident rays originating from the same region of the scene **80** and background **90.**

Accordingly, the incident rays which traverse the first wedge-shaped component **22** are imaged on the first detector region **14a,** and the incident rays which traverse the second wedge-shaped component **24** are imaged on the second detector region **14b.** As a result, the radiation from the same scene **80** and background **90** is imaged separately and simultaneously onto the detector regions **14a** and **14b.** This separation of the two images of the scene **80** and background **90** allows for a double filtering arrangement for gathering spectral information in order to measure and detect the gas.

In the absence of the wedge-shaped components **22** and **24,** the imaging device (detector array **14** and objective lens **20)** has a field of view which can be defined by a cone originating at or near the objective lens **20** and extending towards the scene **80.** The field of view of such a device can equivalently be interpreted as the field of view of the objective lens **20** in combination with the detector **14.** The distance and orientation of the wedge-shaped components **22** and **24** relative to the objective lens **20** is such that the field of view of the objective lens **20** in the vertical direction (XY plane) can be visualized as the angle between the deflected rays **42b** and **44b.**

The angles by which the incident rays **42a, 42d** and **44a** and **44d** are deflected are a function of the angle of incidence, the apex angle of the wedge-shaped components **22** and **24,** and the index of refraction of the material used to construct the wedge-shaped components **22** and **24.** Accordingly, it is preferred that the above mentioned apex angle and material are selected such that the incident rays **42a, 42d** and **44a** and **44d** are deflected by an angle which is approximately ¾ of the field of view of the objective lens **20.** Such a deflection angle ensures that all of the deflected rays are incident on the objective lens **20** and are within the field of view of the device **1.**

Each of the wedge-shaped components **22** and **24,** combined with the objective lens **20** and the detector array **14** defines a field of view. The field of view defined by the objective lens **20** and the first wedge-shaped component **22** is equal to the field of view defined by the objective lens **20** and the second wedge-shaped component **24.** The field of view of the first wedge-shaped component **22** in the vertical direction (XY plane) can be visualized as the angle between the incident rays **42a** and **42d.** Similarly, the field of view of the second wedge-shaped component **24** in the vertical direction (XY plane) can be visualized as the angle between the incident rays **44a** and **44d.**

The imaging device (the detector array **14** and the objective lens **20)** has an f-number defined by the focal length *f* and aperture diameter *D* of the objective lens **20.** The inclusion of the wedge-shaped components **22** and **24** may cause the f-number to increase if not designed properly. Therefore, the wedge-shaped components **22** and **24** should be included in a way that, while the same scene field of view is imaged on two separate halves of the detector, the small f-number is maintained. This can be accomplished if the field of view in one direction is halved (for example in the vertical direction) and the wedge-shaped components **22** and **24** are positioned at a minimum fixed distance d along the optical axis from the objective lens **20.**

Positioning the wedge-shaped components **22** and **24** at a sufficiently large enough distance from the objective lens **20,** in combination with the above mentioned deflection angles, allows for the low f-number (high numerical aperture) at the detector array **14** to be maintained. This corresponds to high optical throughput of the device **1.** As a result, the same radiation from the scene is deflected by the wedge-shaped components **22** and **24** toward the objective lens **20** and imaged on the detector regions **14a** and **14b** through an f-number of the collection optics **18** which can be maintained close to 1 (*f*/1) without having to decrease the focal length *f* for increase the aperture diameter *D*.

As a result of positioning the wedge-shaped components **22** and **24** at the distance *d*, the vertical fields of view of the wedge-shaped components **22** and **24** are approximately half of the above mentioned vertical field of view of the objective lens **20.** Note that the field of view of the device with the wedge-shaped components **22** and **24** in the horizontal direction (XZ plane) is the same as the field of view of the device without the wedge-shaped components (no need to compromise there).

Positioning the wedge-shaped components **22** and **24** too close to the objective lens **20** (i.e. *d* too small) would not allow for the separation of the two images of the same field of view (albeit halved) through the two different filtering components necessary for the detection of the presence or absence of a gas cloud while at the same time maintaining the low f-number for collection of the scene radiation. The distance d which provides such high optical throughput can be approximately lower bounded by:

$$d > \frac{D}{2\tan\left(\frac{\theta}{2}\right)} \qquad (1)$$

where *D* is the aperture diameter of the objective lens **20**

and $\theta$ is the vertical field of view of the objective lens **20.**

In order to help mitigate the effects of beam wander on the wedge shaped components **22** and **24** while keeping their size to a minimum the angle of each of the wedge-shaped components **22** and **24** relative to the optical axis must be designed accordingly. The distance *d* can also be increased beyond the minimum value described in equation (1) to mitigate the effects of beam wander.

The wedge-shaped components **22** and **24** are preferably positioned symmetrically about the optical axis, such that each is positioned at the same distance *d* from the objective lens **20,** and each is positioned at the same angle relative to the optical axis. Such a design ensures that the same amount of radiation is imaged on the detector regions **14a** and **14b** via the objective lens **20** from the wedge-shaped components **22** and **24.**

As a result of the arrangement of the optical components of the collection optics **18,** the same scene **80** and background **90** is imaged on the detector regions **14a** and **14b.** As previously mentioned, the characteristics of the scene **80** are such that the scene **80** affects infrared radiation in the first wavelength band ($\lambda_G$) and does not affect the radiation in the second wavelength band ($\lambda_N$). The radiation from the scene **80** which is imaged onto the first detector region **14a** only includes one of the wavelength bands. The radiation from the scene **80** which is imaged onto the second detector region **14b** only includes the other one of the wavelength bands. This is accomplished by positioning filters, most preferably band pass filters, in the optical train.

With reference to embodiment of the device 1 depicted in Figures 1 and 2, a first filter **26** and a second filter **28** are positioned relative to the respective wedge-shaped components **22** and **24.**

Suppose, for example, that it is desired that the radiation from the scene **80** imaged on the first detector region **14a** only includes radiation in the first wavelength band ($\lambda_G$), and the radiation from the scene **80** imaged on the second detector region **14b** only includes radiation in the second wavelength band ($\lambda_N$). Accordingly, the first filter **26** eliminates radiation in spectral ranges outside of the first wavelength band ($\lambda_G$) and the second filter **28** eliminates radiation in spectral ranges outside of the second wavelength band ($\lambda_N$). Thus, the radiation from the scene **80** that is directed by the first wedge-shaped component **22** to be imaged on the first detector region **14a** includes only radiation in the first wavelength band ($\lambda_G$), and the radiation from the scene **80** that is directed by the second wedge-shaped component **24** to be imaged on the second detector region **14b** includes only radiation in the second wavelength band ($\lambda_N$).

In the embodiment of Figures 1 and 2, the filters **26** and **28** are not necessarily optical elements from the optics of the collection optics **18,** but rather a coating on a first surface **22a** of the first wedge-shaped component **22** and a first surface **24a** of the second wedge-shaped component **24,** respectively. The first surface **22a** is the surface of the first wedge-shaped component **22** which is closest to the objective lens **20**. Likewise, the first surface **24a** is the surface of the second wedge-shaped components **24** which is closest to the objective lens **20**.

Additionally, a second surface **22b** of the first wedge-shaped component **22** and a second surface **24b** of the second wedge-shaped component **24** may be coated with an antireflection coating. The second surfaces **22b** and **24b** are the respective surfaces of the wedge-shaped components **22** and **24** which are closest to the scene **80**. The antireflection coating provides increased sensitivity of the device **1** to the radiation from the scene **80**.

Refer now to Figures 3A-3B, an alternative positioning of the filters **26** and **28**. Similar to the embodiment of Figures 1 and 2, the filters **26** and **28** are implemented as a coating, but in Figure 3A the coating is on the second surface **22b** of the first wedge-shaped component **22**. Similarly, in Figure 3B, the coating is on the second surface **24b** of the second wedge-shaped component **24**.

In the filter alternatives illustrated in Figures 3A and 3B, the first surfaces **22a** and **24a** may be coated with an antireflection coating. It is also noted that for clarity of illustration, the thickness of the coating for implementing the filters **26** and **28** is greatly exaggerated in Figures 1, 2, 3A-3B.

As previously discussed with reference to Figure 4, each image is formed on one half of the detector surface, also referred to as the detector plane. The two halves of the detector plane depicted in Figure 4 are shown as seen from the direction of the incoming radiation. Note that the image of the scene is formed and doubled on the detector surface after having passed through both filters separately, exemplified by the gas cloud of Figures 1 and 2. Both images on the detector regions **14a** and **14b** are upside down with respect to the scene direction, as can be understood from the path of the various rays **42a-42f** and **44a-44f** depicted in Figure 2.

As should be apparent, combinations of the above mentioned filter implementations may be possible. For example, the first filter **26** may be implemented as a coating on the first surface **22a** of the first wedge-shaped component **22**, while the second filter **28** may be implemented as a coating on the second surface **24b** of the second wedge-shaped component **24**. Note that in any of the possible filter implementations, the first and second filters **26** and **28** are in fixed positions relative to the detector array **14** and the collection optics **18**.

As previously discussed, the large numerical aperture and low f-number provides higher sensitivity of the detector array **14** to the radiation from the scene **80**. However, changes in the environmental temperature surrounding the device **1** causes the emission of radiation originating from within the internal walls **30** of the imaging device **1**, the optical system **18**, and the optical components themselves to vary with time. This emission of radiation is referred to interchangeably as unwanted radiation. The unwanted radiation in turn leads to drifts in the imaged pixels signals, and erroneous results in the gas path concentration of each pixel of the image of the scene as measured by the device **1** according to appropriate algorithms. Compensation for such drifts provides a means to ensure quantitative results of the gas distribution in the scene without using moving parts.

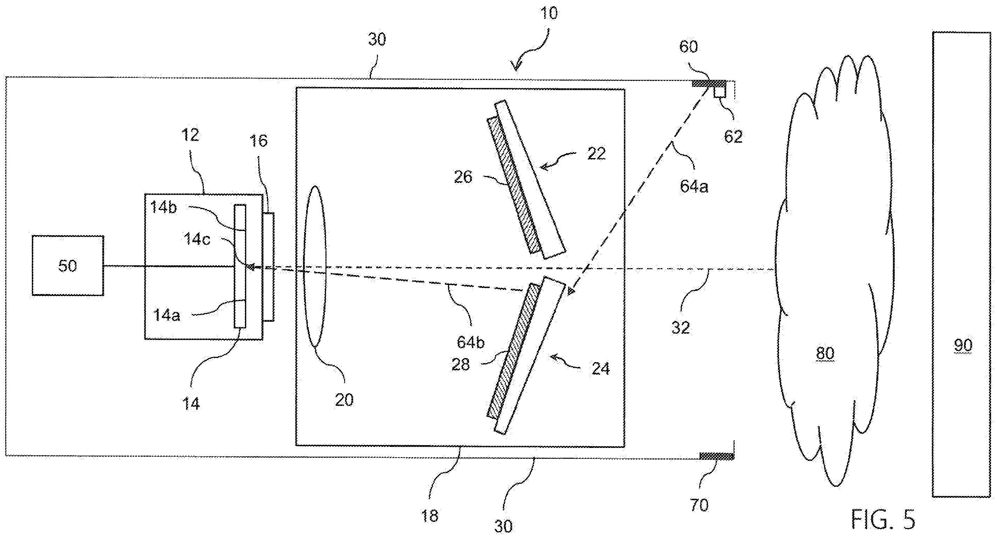

Refer now to Figure 5, a device **10** for reducing the effect of the unwanted radiation according to an embodiment of the present disclosure. The description of the structure and operation of the device **10** is generally similar to that of the device **1** unless expressly stated otherwise, and will be understood by analogy thereto. Ideally, the device **10** reduces the signal drift to a negligible amount essentially correcting for the effect of the drift. Accordingly, the terms "correcting for", "compensating for" and "reducing", when applied to drift in imaged pixels signals, are used interchangeably herein.

For simplicity and disambiguation, the device **10** is hereinafter referred to as the imaging device **10**. The term "imaging device" is used herein to avoid confusing the device **1** with the imaging device **10**, and is not intended to limit the functionality of the imaging device **10** solely to imaging. The imaging device **10** may also include functionality for detection, measurement, identification and other operations relevant to infrared radiation emanating from a scene.

A specific feature of the imaging device **10** which is not shown in the device **1** is image acquisition electronics **50** associated with the detector array **14**. As shown in Figure 5, the image acquisition electronics **50** is electrically coupled to the detector array **14** for processing output from the detector in order to generate and record signals corresponding to the detector elements for imaging the scene **80**. As will be discussed, the image acquisition electronics **50** is further configured to apply a correction to the generated scene pixels signals in order to reduce the drift in the generated scene pixels signals caused by the radiation originating from within the internal walls **30** of the imaging device **10**, the optical system **18**, and the optical components themselves.

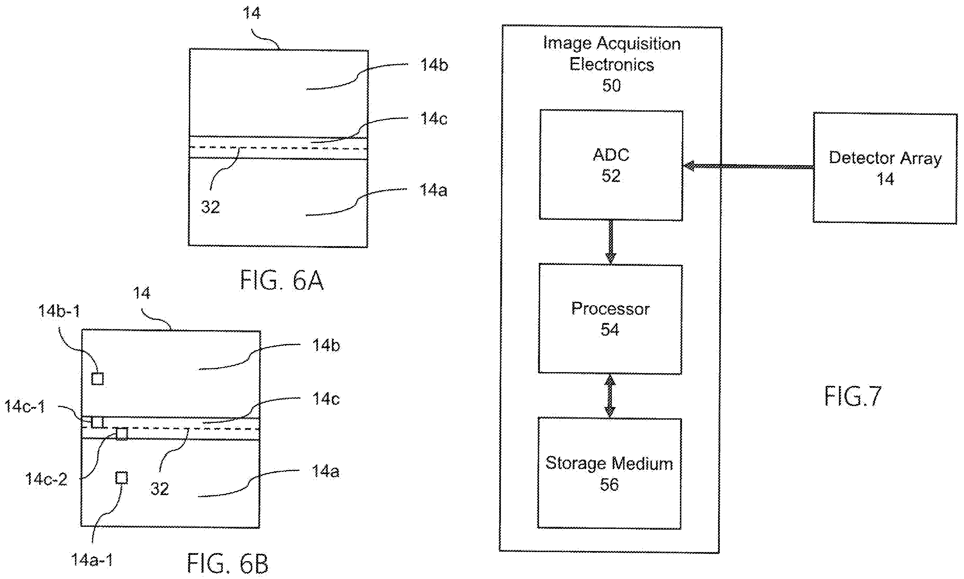

Refer now to Figure 7, a block diagram of the image acquisition electronics **50**. The image acquisition electronics **50** preferably includes an analog to digital conversion module (ADC) **52** electrically coupled to a processor **54**. The processor **54** is coupled to a storage medium **56**, such as a memory or the like. The ADC **52** converts analog voltage signals from the detector elements into digital signals. The processor **54** is configured to perform computations and algorithms based on the digital signals received from the ADC **52**.

The processor **54** can be any number of computer processors including, but not limited to, a microprocessor, an ASIC, a DSP, a state machine, and a microcontroller. Such processors include, or may be in communication with computer readable media, which stores program code or instruction sets that, when executed by the processor, cause the processor to perform actions. Types of computer readable media include, but are not limited to, electronic, optical, magnetic, or other storage or transmission devices capable of providing a processor with computer readable instructions.

As shown in Figure 5, the image acquisition electronics **50** may be positioned outside of the detector case **12.** Alternatively, the image acquisition electronics **50** may be included as part of the detector array **14** and detector case **12** combination.

Another specific feature of the imaging device **10** that is different from the device **1** is the partition of the detector array **14** into more than the two separate regions of the detector array of the device **1** as shown in Figure 4 As shown in Figure 6A, the detector array **14** of the imaging device **10** is partitioned into three separate regions, a first detector region **14a,** a second detector region **14b,** and a third detector region **14c.** The area of the third detector region **14c** is significantly smaller or not usually larger than the areas of the other two detector regions and can be visualized as a strip extending across the center of the detector plane along the Z-axis.

The optical system composed of the wedge-shaped components **22** and **24,** and the objective lens **20** simultaneously images the scene **80** upside down in both regions **14a** and **14b** while projecting infrared radiation emitted by a surface **60** (e.g. a blackbody radiation source) onto the third detector region **14c.** The surface **60** is in good thermal contact with the walls **30** of the device and is in the vicinity of the optical components, so that the temperature of the surface **60** can be assumed to be at all times at the temperature of the device walls **30** and optics **18,** which in turn is affected by (and usually, especially when used in outdoor conditions, close to) the environment temperature. In other words, the signals of the detector elements of the third detector region **14c** do not carry information from the scene **80,** but rather carry information on the self-emitted radiation of the internal walls **30** and optics **18** of the device. Therefore, the pixels signals of the third detector region **14c** can be used by the device **10** algorithms and electronics to correct for the unwanted changes to the signals of the detector regions **14a** and **14b** that are caused by changing environment and not by the corresponding regions of scene **80.** The pixels of the third detector region **14c** are referred to as "blind pixels". Additionally, a baffle or baffles may be positioned to prevent radiation from the scene **80** from reaching the third detector region **14c.**

The above explanation constitutes a third specific feature of the imaging device **10,** which is different from the device **1,** namely the inclusion of the blackbody radiation source **60** within the internal walls **30** of the imaging device **10.** The blackbody radiation source **60** is positioned such that the blackbody radiation source **60** emits radiation which is projected only onto the third detector region **14c,** resulting in the blind pixels as previously mentioned to produce signals which, as will be discussed in more detail below, are used to reduce the drift in the signals from the scene, due to changing case and optics self-emission. The traversal of incident rays **64a** and **64b** from the blackbody radiation source **60** to the detector array **14** is shown in Figure 5. Note that the traversal of the rays as depicted in Figure 5 is not drawn to scale (due to drawings space constraints), and that the deflection angle between the rays **64a** and **64b** is approximately the same as the deflection angle between the rays **44d** and **44e** (Figure 2).

The blackbody radiation source **60** can be placed in various positions within the imaging device **10.** Preferably, the blackbody radiation source **60** is placed in contact with the internal walls **30** of the imaging device **10** and outside of the optical system **18,** and most preferably in proximity to the optical system **18.** The placement of the blackbody radiation source **60** within the imaging device **10** is incumbent upon the radiation being focused by the optical system **18** onto only the third detector region **14c** to generate the blind pixels signals.

In the non-limiting implementation of the imaging device **10** shown in Figure 5, the blackbody radiation source **60** is positioned such that the radiation from the blackbody radiation source **60** is directed by the second wedge-shaped component **24** through the objective lens **20** onto the third detector region **14c.** Note that in addition to the blackbody radiation source **60,** an additional blackbody radiation source **70** can be placed in a symmetric position about the X-axis such that the radiation from the blackbody radiation source **70** is directed by the first wedge-shaped component **22** through the objective lens **20** onto the third detector region **14c** as well.

The process of reducing and/or correcting for the drift in the generated scene pixels signals is applied to all scene pixels signals. For clarity, the process will be explained with reference to correcting for the drift in a single scene pixel signal.

The optical components, the optical system **18,** and the spaces between the internal walls **30** are assumed to be at a temperature $T_E$, which is usually close to and affected by the temperature of the environment in which the imaging device **10** operates. As a result, the amount of radiation originating from the optical components and the optical system **18** is a direct function of the temperature $T_E$.

Since the blackbody radiation source **60** (and **70** if present) is placed within the imaging device **10** and in good thermal contact with the device **10,** the optical components **18** and the walls **30,** the temperature of the blackbody radiation source **60** ($T_{BB}$) is assumed to be the same or a function of the temperature $T_E$ (i.e. $T_{BB}$ and $T_E$ are correlated). $T_{BB}$ can be measured by a temperature probe **62** placed in proximity to, or within, the blackbody radiation source **60.**

A measured scene pixel signal S from a region of the scene, can be expressed as the sum of two signal terms, a first signal term $S_O$, and a second signal term $S_S$. The first signal term $S_O$ is the signal contribution to $S$

corresponding to the radiation originating from the optical components, the optical system **18,** and walls **30** of the device **10**. The second signal term $S_S$ is the signal contribution to $S$ due to the radiation originating from the corresponding region of the scene **80** imaged on the pixel in question. Accordingly, the scene pixel signal $S$ is the result of the combination of radiation originating from the device walls **30** and environment, optical components and the optical system **18,** and radiation from the scene **80,** being imaged onto the two detector regions **14a** and **14b.**

Since the blackbody radiation source **60** is assumed to be at a temperature that is a direct function of the temperature $T_E$, the radiation emitted by the blackbody radiation source **60** is representative of the radiation originating from the optical components and the optical system **18** and device walls 30 and environment. Accordingly, a blind pixel signal, $S_B$, may be assumed to be also a good representation of the contribution to the scene pixel signal due to the radiation originating from the environment, the optical components and the optical system **18.**

As a result of the radiation originating from the optical components and the optical system **18** being a direct function of the temperature $T_E$, the first signal term $S_O$ (if the above assumptions are correct) is also a direct function of the temperature $T_E$. This can be expressed mathematically as $S_O = f_1(T_E)$, where $f_1(\cdot)$ is a function.

Similarly, as a result of the blind pixel signal $S_B$ being assumed to be a good representation of the pixel signal contribution corresponding to the radiation originating from the optical components and the optical system **18,** the blind pixel signal $S_B$ can also be assumed to be a direct function of the walls **30,** the environment and optical system temperature $T_E$. This can be expressed mathematically as $S_B = f_2(T_E)$, where $f_2(\cdot)$ is also a function.

Accordingly, since both the first signal term $S_O$ and the blind pixel signal $S_B$ are functions of the same operating temperature $T_E$, it is conceivable that a correlation may exist between the first signal term $S_O$ and the blind pixel signal $S_B$. With the knowledge of the correlation (if existing), the first signal term $S_O$ and the changes in time of $S_O$ (referred to hereinafter as "scene pixel signal drifts") can be determined from the blind pixel signal $S_B$ and the changes in time of $S_B$. Accordingly, in the above assumptions, the changes in time or drifts of the scene pixel signal $S$ due to environment status can be removed and corrected for, in order to prevent gas quantity calculation errors.

In the context of this document, the term "correlation", when applied to a relationship between sets of variables or entities, generally refers to a one-to-one relationship between the sets of variables. As such, a correlation between the first signal term $S_O$ and the blind pixel signal $S_B$ indicates a one-to-one relationship between the first signal term $S_O$ and the blind pixel signal $S_B$ at any temperature of the imaging device **10**. This correlation is determined by a sequence of controlled measurements. The sequence of controlled measurements is performed prior to when the imaging device **10** is in operation in the field, and can be considered as a calibration procedure or process to be performed in manufacturing of the device. For the purposes of this document, the imaging device **10** is considered to be in an operational stage when the radiation from the scene **80** is imaged by the detector array **14** and the drift in the generated imaged pixels signals is actively reduced by the techniques as will later be described.

Recall the assumption that the blackbody radiation source **60** is at a temperature that is a direct function of the temperature $T_E$. According to this assumption, the blind pixel signal $S_B$ is assumed to be a good representation of the pixel signal contribution due to the radiation originating from the optical components and the optical system **18**. Prior to determining the correlation function between the first signal term $S_O$ and the blind pixel signal $S_B$, it is first necessary to verify the actuality of the above assumptions. Subsequent to the verification, the correlation function between the time changes of the first signal term $S_O$ (scene pixel signal drifts) and the blind pixel signal $S_B$ time changes can be determined. Both the verification process, and the process of determining the correlation function, is typically conducted through experiment. In practice, only drifts, or unwanted changes of the imaged pixel signals over time are to be corrected for, so the process of verification and determination of the correlations are only needed and performed between the differentials of $S_O$, $S_B$, or variations during time due to environment temperature variations.

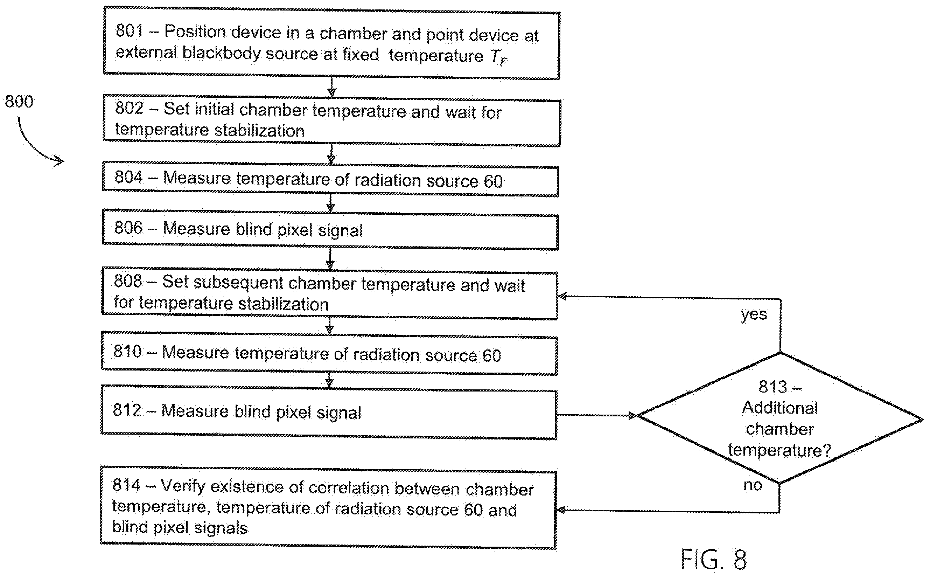

Refer now to Figure 8, a flowchart of a process **1000** for verifying the existence of a correlation between the environment temperature, the temperature of the blackbody radiation source **60** (and **70** if present) and the blind pixel signal $S_B$. In step **801,** the imaging device **10** is placed in a temperature controlled environment, such as a temperature chamber having a controllable and adjustable temperature, and to point the device **10** at an external blackbody source at a fixed temperature $T_F$ so that the scene pixels of the detector regions **14a** and **14b** are exposed to unchanging radiation from the external blackbody. Such an external blackbody source is used in place of the scene **80** depicted in Figures 1, 2 and 5. In step **802,** the temperature of the temperature chamber is set to an initial temperature $T_0$. The temperature of the temperature chamber and the imaging device **10** are let to stabilize to temperatures $T_0$ and $T_E$ respectively by allowing for an appropriate interval of time to pass.

Once the temperatures have stabilized, $T_{BB}$ (which may be practically equal to $T_E$) is measured via the temperature probe **62** in step **804**. In step **806,** the blind pixel signal $S_B$ is measured via the image acquisition electronics **50**. Accordingly, the blind pixel signal $S_B$ and $T_{BB}$ are measured at temperature $T_0$, in steps **804** and **806,** respectively.

In step **808,** the temperature of the temperature chamber is set to a different temperature $T_1$. Similar to step **802,** the temperatures of the temperature chamber and the imaging device **10** are let to stabilize to temperature $T_1$ and a new temperature $T_E$, respectively, by allowing for an appropriate interval of time to pass. Once the temperatures have stabilized, $T_{BB}$ is measured via the temperature probe **62** in step **810.** In step **812,** the blind pixel signal $S_B$ is measured via the image acquisition electronics **50.** Accordingly, the blind pixel signal $S_B$ and $T_{BB}$ are measured at chamber temperature $T_1$ in steps **810** and **812,** respectively.

The process may continue over a range of chamber temperatures of interest, shown by the decision step **813.** For each selected chamber temperature, the blind pixel signal $S_B$ and $T_{BB}$ and $T_E$ are measured as in steps **804, 806, 810** and **812** above.

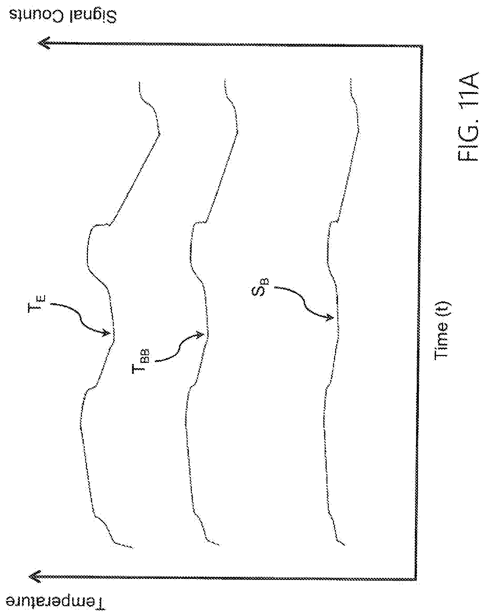

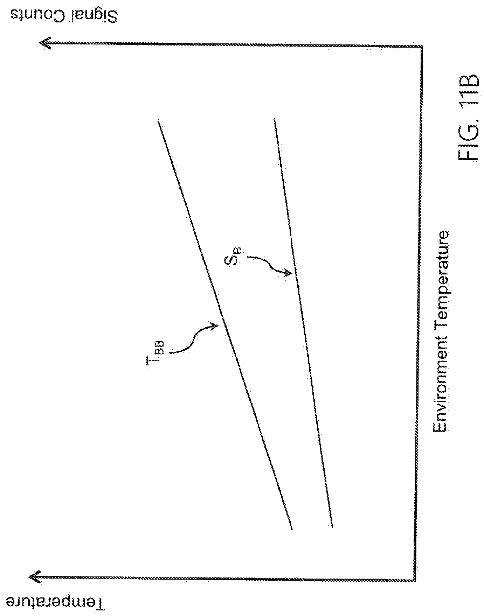

In step **814,** the existence of a correlation between the environment temperature, the blind pixel signal $S_B$ and the temperature of the blackbody radiation source **60** (and **70** if present) is verified by analyzing the resultant measurements. For example, the blind pixel signal $S_B$ measurements from steps **804** and **810** can be plotted as function of the operating temperatures $T_E$ established in steps **802** and **808.** Similarly, the $T_{BB}$ measurements from steps **806** and **812** can be plotted or otherwise visualized versus the range of operating temperatures $T_E$ established in steps **802** and **808.** An example of plots for executing step **814** is depicted in Figures 11A and 11B.

Referring first to Figure 11A, an example of plots of the measurements of the operating temperatures ($T_E$), the blind pixel signal ($S_B$), and the blackbody radiation source temperature ($T_{BB}$ measured via the temperature probe **62)** is depicted. The plots shown in Figure 11A are intended to serve as illustrative examples, and should not be taken as limiting in the scope or implementation of the process **800.**

Note that the x-axis in Figure 11A is designated as "time ($t$)", as should be apparent due to the variation of the operating temperatures ($T_E$) as time ($t$) goes by. Also note that the example plots shown in Figure 11A includes two y-axes. The first y-axis (shown on the left side of Figure 11A) is designated as "temperature" and corresponds to the operating temperatures ($T_E$) and the blackbody radiation source temperature ($T_{BB}$). The second y-axis (shown on the right side of Figure 11A), is designated as "signal counts" and is the measured output of the ADC **52** corresponding to the blind pixel signal ($S_B$).

If there is a linear (or any other one-to-one) relationship between the three entities $T_E$, $T_{BB}$, and $S_B$, the above discussed assumptions are upheld to be valid, and therefore there exists a correlation between the temperatures $T_E$, $T_{BB}$, and the blind pixel signal $S_B$.

Referring now to Figure 11B, the recognition of such a linear relationship can be shown by alternatively plotting the measurements depicted in Figure 11A. As should be apparent, the example plots shown in Figure 11B show the blackbody radiation source temperature ($T_{BB}$) and the blind pixel signal ($S_B$) signal counts versus the temperature $T_E$, which, as previously discussed, is the environment temperature. Accordingly, the x-axis in Figure 11B is designated as "environment temperature". As in Figure 11A, Figure 11B also includes two y-axes. The first y-axis (shown on the left side of Figure 11B) is designated as "temperature" and corresponds to the blackbody radiation source temperature ($T_{BB}$). The second y-axis (shown on the right side of Figure 11B), is designated as "signal counts" and is the measured output of the ADC **52** corresponding to the blind pixel signal ($S_B$).

Similar to the plots shown in Figure 11A, the plots shown in Figure 11B are intended to serve as illustrative examples, and should not be taken as limiting in the scope or implementation of the process **800.** As can be clearly seen in the illustrative example depicted in Figure 11B, a linear relationship of non-zero slope (which is an example of a one-to-one relationship) exists between the three entities $T_E$, $T_{BB}$, and $S_B$, thus implying that the three entities are correlated.

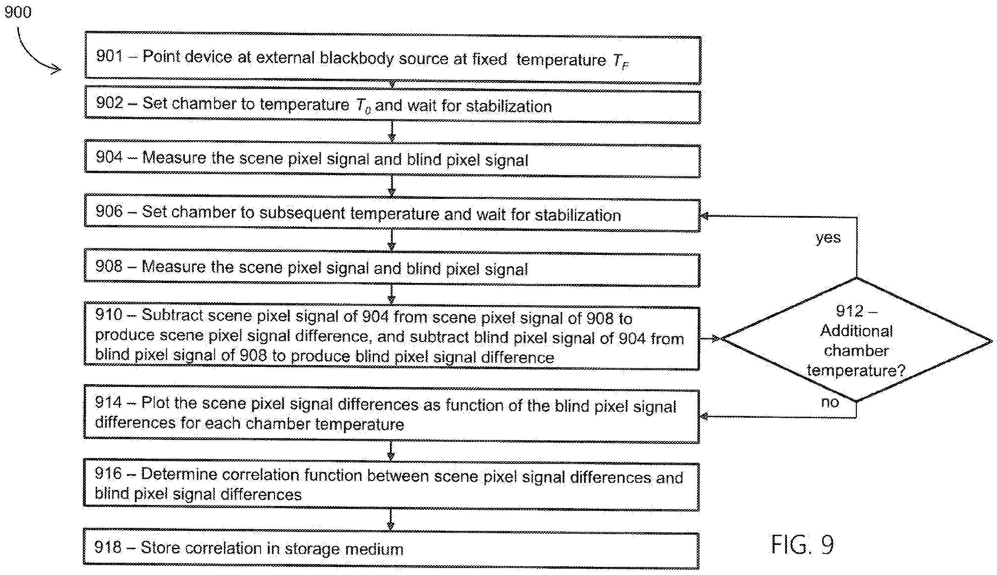

Refer now to Figure 9, a flowchart of a process **900** for determining a correlation between the drifts of scene pixels signals and the blind pixel signals $S_B$ changes due to changes in environment temperature. Similar to the process **800,** before performing the process **900,** the imaging device **10** is placed in the temperature chamber. The imaging device **10** is also pointed at a source of infrared radiation representing and simulating a scene during the operation of the device **10,** most conveniently a blackbody source at a known and fixed temperature. The blackbody may be positioned inside the temperature chamber or outside of the temperature chamber and measured by the imaging device **10** through an infrared transparent window. In the process **900,** measurements of the scene pixel signal S and the blind pixel signal $S_B$ are made via the image acquisition electronics **50.**

In step **901** (similar to step **801** above), the device **10** is retained in the temperature chamber and pointed at the external blackbody source which is set to a fixed temperature $T_F$. In step **902,** the temperature of the temperature chamber is set to an initial temperature $T_0$. The chamber and the device **10** are let to stabilize at temperature $T_0$ by waiting an appropriate period of time. In step **904,** the imaged pixel signal S and the blind pixel signal $S_B$ are measured after the temperature of the imaging device **10** reaches stabilization at $T_0$.

In step **906,** the temperature of the temperature chamber is set to a new temperature $T_1$, and the external blackbody is maintained at the temperature $T$. The chamber and the device 10 are let to stabilize at temperature $T_1$ by waiting an appropriate period of time. In step **908,** the scene pixel signal $S$ and the blind pixel signal $S_B$ are measured after the temperature of the imaging device **10** reaches stabilization *at $T_1$.*

In step **910,** the imaged pixel signal S measured in step **904** is subtracted from the imaged pixel signal S measured in step **908.** The result of step **910** yields the temporal drift of the imaged pixel signal due to the change in the temperature of the temperature chamber. Also in step **910,** the blind pixel signal $S_B$ measured in step **904** is subtracted from the blind pixel signal $S_B$ measured in step **908.**

Similar to the process **800**, the process **900** may continue over a range of chamber temperatures of interest, shown by decision step **912.** For each selected chamber temperature, the imaged pixel signal $S$ measured in step **904** is subtracted from the imaged pixel signal $S$ measured at the selected temperature, and the blind pixel signal $S_B$ measured at step **904** is subtracted from the blind pixel signal $S_B$ measured at the selected temperature. This procedure can be performed for all the operating temperature ranges of the imaging device.

In step **914,** the resultant differences in the scene pixels obtained in step **910** are plotted as function of the blind pixel differences obtained at each chamber temperature. In step **916,** the correlation function is determined by analyzing the results of the plot obtained in step **914.** Numerical methods, such as, for example, curve-fitting, least-squares, or other suitable methods, can be used to further facilitate the determination of the correlation function.

As should be apparent, the resulting correlation function can be interpolated and extrapolated to cover operating temperature ranges not measured during the execution of the processes **800** and **900.** In step **918,** the correlation function determined in step **916** is stored in a memory coupled to the processor **54,** such as, for example, the storage medium **56.**

Note that typical environment temperature variations used during the execution of the processes **800** and **900** may depend on various factors such as, for example, the location of the imaging device **10** when in the operational stage and the intended specific use of the imaging device **10** when in the operational stage. For example, when the imaging device **10** is used for monitoring in industrial installations and facilities for gas leakages, the temperature variations occurring during the execution of the processes **800** and **900** are typically in the range of tens of degrees.

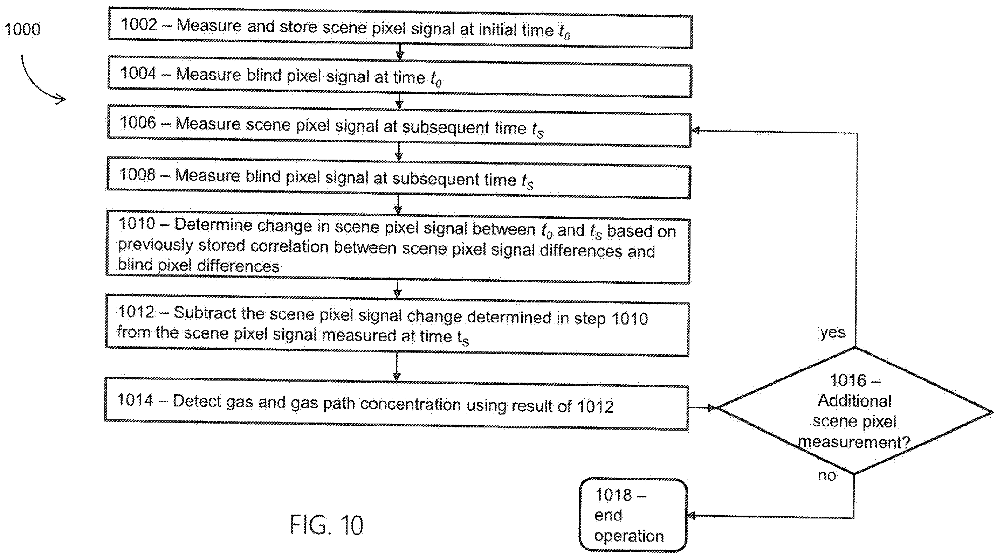

As a result of the correlation function determined by the process **900,** during the operation of the imaging device **10,** signal drifts of the measured scene pixel signals can be compensated in real time while the temperature of the environment changes. The process of compensating and/or correcting for the signal drifts during operation of the imaging device **10** is detailed in Figure 10.

Refer now to Figure 10, a flowchart of a process **1000** for correcting for the signal drifts in the imaged pixel signal $S$ caused by environment temperature changes, while the device **10** is operational in the field. In steps **1002-1014** the device **10** is operational in the field and monitors a scene in an industrial environment, automatically and without human intervention.

In step **1002,** the scene pixel signal $S$ is measured and stored at an initial time $t_0$. The scene pixel measured at time $t_0$ may be stored in the storage medium **56** or stored in a temporary memory coupled to the processor **54.** In step **1004,** the blind pixel signal $S_B$ is measured at the same initial time $t_0$. In step **1006,** the scene pixel signal $S$ is measured at a subsequent time $t_S$ after the initial time $t_0$. In step **1008,** the blind pixel signal $S_B$ is measured at the same subsequent time $t_S$.

In step **1010,** the blind pixel signal $S_B$ measured in step **1004** is subtracted from the blind pixel signal $S_B$ measured in step **1008.** In step **1010,** the drift of scene pixel signal that occurred between the measurement time $t_0$ and $t_S$ (due to change in the environment temperature) is determined from the correlation function of signal differences determined and stored in the procedure **900.** The determination of the drift of scene pixel signal in step **1010** is accomplished by subtracting the blind pixel signal measured in step **1004** from the blind pixel signal measured in step **1008.** The resultant difference in blind pixel signal measurements is substituted into the correlation function of signal differences determined in the procedure **900** to determine the drift of scene pixel signal.

In step **1012,** the scene pixel signal $S$ measured at step **1006** is modified by subtracting from it the drift value determined in step **1010.**

In step **1014,** the scene pixel signal modified in step **1012** is used to assess the presence or absence of the gas of interest in the corresponding scene region, and to calculate the gas path concentration if the gas is present. As should be apparent, steps **1006-1014** can be repeated, as needed, for additional measurements by the device **10** of the scene pixel signals for the detection and path concentration of the gas. This is shown by decision step **1016.** Accordingly, if additional scene pixel signal measurements are needed, the process **1000** returns to step **1006** (at a new subsequent time $t_S$). If no additional scene pixel signal measurements are needed, the process ends at step **1018.**

Note that as a result of the structure and operation of the device **10** when in the operational stage, the radiation from the blackbody source **60** (and **70** if present) is projected onto the third detector region **14c** continuously over the duration for which the radiation from the scene **80** is focused onto the detector regions **14a** and **14b.** This is required by the process and results in the reduced frequency of shutter open and closing when in the operational stage, and in a more accurate determination and quantification of the relevant gas present in the scene.

Note that the blind pixel signal that used to correct the drift in an imaged pixel signal is typically, and preferably, the blind pixel signal associated with the blind pixel that is positioned above or below the associated imaged pixel. In other words, the blind pixel signal used to correct the drift in an imaged pixel signal is preferably the blind pixel signal associated with the detector element closest in position to the detector element associated with the imaged pixel signal. For example, as shown in Figure 6B, the blind pixel **14c-1** is used to correct for the drift in imaged pixel **14b-1**. Likewise, the blind pixel **14c-2** is used to correct for the drift in imaged pixel **14a-1**.

As mentioned above, the above described processes **800, 900** and **1000** were explained with reference to correcting for the drift in a single imaged pixel signal. As previously mentioned, the same processes may be performed for each of the imaged pixels signals, and may be performed in parallel. The process for correcting for the drift may be supplemented by known methods, such as, for example, NUC, in order to further reduce and correct for the effect of the signal drift. As a result of the drift correction via the processes **800, 900** and **1000** described above, the supplemental NUC method is performed at a reduced frequency. The frequency of operation of the supplemental NUC method is typically in the range of once per hour to once per day.

It will be appreciated that the above descriptions are intended only to serve as examples, and that many other embodiments are possible within the scope of the present invention as defined in the appended claims.

## Claims

1. A device (1) for imaging radiation from a scene (80), the radiation including at least a first and second wavelength band, the device comprising:

   (a) a detector (14) of the radiation from the scene (80), the detector (14) being uncooled and including a first detector region (14a) and a second detector region (14b), the first and second detector regions (14a, 14b) being separate;
   (b) a first filter (26) and a second filter (28), the first filter (26) associated with the first detector region (14a) for allowing radiation in the first wavelength band to be imaged on the first detector region (14b), the second filter (28) associated with the second detector region (14b) for allowing radiation in the second wavelength band to be imaged on the second detector region (14b); and
   (c) an optical system (18) for focusing the radiation from the scene (80) onto the two separate regions (14a, 14b) of the detector (14), and for forming two images of the same scene on the two separate regions (14a, 14b) of the detector (14), the optical system (18) comprising:

      (i) an image forming optical component (20) for forming an image of the scene (80) on the detector (14), a field of view of the scene (80) being defined in part by the image forming optical component (20), and
      (ii) a first substantially wedge-shaped component (22) and a second substantially wedge-shaped component (24), the first wedge-shaped component (22) associated with the first filter (26), the second wedge-shaped component (24) associated with the second filter (28), each of the wedge-shaped components (22, 24) having an apex angle and a refractive index chosen so that each of the wedge-shaped components (22, 24) deflects radiation from the scene (80) by a deflection angle that is approximately ¼ of the field of view defined by the image forming optical component (20), each of the wedge-shaped components (22, 24) fixedly positioned at a distance from the image forming optical component (20) greater than a minimum threshold distance determined according to the formula $\frac{D}{2 \tan\left(\frac{\theta}{2}\right)}$, wherein D is the aperture diameter of the image forming optical component (20) and θ is the field of view defined by the image forming optical component (20), each of the wedge-shaped components (22, 24) directing radiation from the field of view of the scene (80) through the image forming optical component (20) onto the detector (14) such that the radiation is imaged separately and simultaneously onto the first and second detector regions (14a, 14b) through an f-number of the optical system (18) of less than approximately 1.5, each of the two scene images formed on each of the detector regions (14a, 14b) including radiation in one respective wavelength band.

2. The device (1) of claim 1, wherein each of the first and second filters (26, 28) is a band pass filter.

3. The device (1) of claim 1, wherein the first filter (26) is disposed on one of a first surface (22a) or a second surface (22b) of the first wedge shaped component (22), and the second filter (28) is disposed on one of a first surface (24a) or a second surface (24b) of the second wedge shaped component (24).

4. The device (1) of claim 3, wherein the first surface (22a) of the first wedge-shaped component (22) is a closest surface of the first wedge-shaped component (22) to the image forming optical component (20), and the first surface (24a) of the second wedge-shaped component (24) is a closest surface of the second wedge-shaped component (24) to the image forming optical component (20), and the second surface (22b) of the first wedge-shaped component (22) is a closest surface of the first wedge-shaped component (22) to the scene (80), and the second surface (24b) of the second wedge-shaped component (24) is a closest surface of the second wedge-shaped component (24) to the scene (80).

5. The device (1) of claim 1, wherein an antireflective material is disposed on at least one of a first surface (22a) and a second surface (22b) of the first wedge-shaped component (22), and on at least one of a first surface (24a) and a second surface (24b) of the second wedge-shaped component (24).

6. The device (1) of claim 1, wherein the first and second wedge-shaped components (22, 24) are substantially symmetrically disposed relative to an optical path of radiation.

7. The device (1) of claim 1, wherein each of the first and second wedge-shaped components (22, 24) is oriented at a respective angle relative to an optical path of radiation from the scene (80) to the detector (14).

8. The device (1) of claim 1, wherein the presence of the first and second wedge-shaped components (22, 24) results in a vertical field of view approximately halved with respect to a field of view of the device (1) defined by the image forming optical component (20).

**Patentansprüche**

1. Vorrichtung (1) zur Abbildung von Strahlung einer Szene (80), wobei die Strahlung mindestens ein erstes und ein zweites Wellenlängenband umfasst, umfasst:

(a) einen Detektor (14) für die Strahlung der Szene (80), wobei der Detektor (14) ungekühlt ist und einen ersten Detektorbereich (14a) und einen zweiten Detektorbereich (14b) beinhaltet, wobei der erste und zweite Detektorbereich (14a, 14b) getrennt sind;
(b) ein erster Filter (26) und ein zweiter Filter (28), wobei der erste Filter (26) einem ersten Detektorbereich (14a) zugeordnet ist und dafür eingerichtet ist, Strahlung in einem ersten Wellenlängenband auf dem ersten Detektorbereich (14a) abzubilden, und wobei der zweite Filter (28) einem zweiten Detektorbereich (14b) zugeordnet ist und dafür eingerichtet ist, Strahlung in einem zweiten Wellenlängenband auf dem zweiten Detektorbereich (14b) abzubilden; und
(c) ein optisches System (18) zum Fokussieren der Strahlung aus der Szene (80) auf die zwei getrennten Bereiche (14a, 14b) des Detektors (14) und zum Erzeugen von zwei Bildern derselben Szene auf den zwei getrennten Bereichen (14a, 14b) des Detektors (14), wobei das optische System (18) umfasst:

(i) ein bildgebendes optisches Element (20) zum Erzeugen eines Bildes der Szene (80) auf dem Detektor (14), wobei ein Sichtfeld der Szene (80) teilweise durch das bildgebende optische Element (20) definiert ist, und
(ii) ein erstes im Wesentlichen keilförmiges Element (22) und ein zweites im Wesentlichen keilförmiges Element (24), wobei das erste keilförmige Element (22) dem ersten Filter (26) zugeordnet ist und das zweite keilförmige Element (24) dem zweiten Filter (28) zugeordnet ist, wobei jedes der keilförmigen Elemente (22, 24) einen Scheitelwinkel und einen Brechungsindex aufweist, die so gewählt sind, dass jedes der keilförmigen Elemente (22, 24) die Strahlung aus der Szene (80) um einen Ablenkwinkel ablenkt, der ungefähr einem Viertel des vom bildgebenden optischen Element (20) definierten Sichtfeldes entspricht, wobei jedes der keilförmigen Elemente (22, 24) in einem festen Abstand vom bildgebenden optischen Element (20) angeordnet ist, der größer ist als ein gemäß der Formel

$$\frac{D}{2\tan\left(\frac{\theta}{2}\right)}$$

bestimmter Mindest-Schwellenabstand, wobei D der Blenden-durchmesser des bildgebenden optischen Elements (20) und $\theta$ das vom bildgebenden optischen Element (20) definierte Sichtfeld ist, wobei jedes der keilförmigen Elemente (22, 24) die Strahlung aus dem Sichtfeld der Szene (80) durch das bildgebende optische Element (20) auf den Detektor (14) leitet, sodass die Strahlung getrennt und gleichzeitig auf den ersten und zweiten Detektorbereich (14a, 14b) durch eine Blendenzahl des optischen Systems (18) von weniger als etwa 1,5 abgebildet wird, wobei jedes der zwei Szenenbilder, die auf den jeweiligen Detektorbereichen (14a, 14b) erzeugt werden, Strahlung in einem jeweiligen Wellenlängenband umfasst.

2. Vorrichtung (1) nach Anspruch 1, wobei jeweils der erste Filter (26) und der zweite Filter (28) ein Bandpassfilter sind.

3. Vorrichtung (1) nach Anspruch 1, wobei der erste Filter (26) auf einer ersten Oberfläche (22a) oder einer zweiten Oberfläche (22b) des ersten keilförmigen Elements (22) angeordnet ist und der zweite Filter (28) auf einer ersten Oberfläche (24a) oder einer zweiten Oberfläche (24b) des zweiten keilförmigen Elements (24) angeordnet ist.

4. Vorrichtung (1) nach Anspruch 3, wobei die erste Oberfläche (22a) des ersten keilförmigen Elements (22) die dem bildgebenden optischen Element (20) nächstgelegene Oberfläche des ersten keilförmigen Elements (22) ist, wobei die erste Oberfläche (24a) des zweiten keilförmigen Elements (24) die dem bildgebenden optischen Element (20) nächstgelegene Oberfläche des zweiten keilförmigen Elements (24) ist, wobei die zweite Oberfläche (22b) des ersten keilförmigen Elements (22) die der Szene (80) nächstgelegene Oberfläche des ersten keilförmigen Elements (22) ist, und wobei die zweite Oberfläche (24b) des zweiten keilförmigen Elements (24) die der Szene (80) nächstgelegene Oberfläche des zweiten keilförmigen Elements (24) ist.

5. Vorrichtung (1) nach Anspruch 1, wobei ein Antireflexionsmaterial auf zumindest einer der ersten Oberfläche (22a) und der zweiten Oberfläche (22b) des ersten keilförmigen Elements (22) sowie auf zumindest einer der ersten Oberfläche (24a) und der zweiten Oberfläche (24b) des zweiten keilförmigen Elements (24) angeordnet ist.

6. Vorrichtung (1) nach Anspruch 1, wobei die ersten und zweiten keilförmigen Elemente (22, 24) im Wesentlichen symmetrisch relativ zu einem optischen Strahlengang angeordnet sind.

7. Vorrichtung (1) nach Anspruch 1, wobei jedes der ersten und zweiten keilförmigen Elemente (22, 24) in einem jeweiligen Winkel relativ zu einem optischen Strahlengang der Strahlung von der Szene (80) zum Detektor (14) ausgerichtet ist.

8. Vorrichtung (1) nach Anspruch 1, wobei das Vorhandensein der ersten und zweiten keilförmigen Elemente (22, 24) zu einem vertikalen Sichtfeld führt, das gegenüber einem durch das bildgebende optische Element (20) definierten Sichtfeld der Vorrichtung (1) ungefähr halbiert ist.

**Revendications**

1. Dispositif (1) pour l'imagerie d'un rayonnement provenant d'une scène (80), le rayonnement incluant au moins une première et une deuxième bande de longueurs d'onde, le dispositif comprenant :

   (a) un détecteur (14) du rayonnement provenant de la scène (80), le détecteur (14) n'étant pas refroidi et incluant une première région de détecteur (14a) et une deuxième région de détecteur (14b), les première et deuxième régions de détecteur (14a, 14b) étant séparées ;

   (b) un premier filtre (26) et un deuxième filtre (28), le premier filtre (26) étant associé à la première région de détecteur (14a) pour permettre au rayonnement dans la première bande de longueurs d'onde d'être imagé sur la première région de détecteur (14b), le deuxième filtre (28) étant associé à la deuxième région de détecteur (14b) pour permettre au rayonnement dans la deuxième bande de longueurs d'onde d'être imagé sur la deuxième région de détecteur (14b) ; et

   (c) un système optique (18) pour focaliser le rayonnement provenant de la scène (80) sur les deux régions séparées (14a, 14b) du détecteur (14), et pour former deux images de la même scène sur les deux régions séparées (14a, 14b) du détecteur (14), le système optique (18) comprenant :

   (i) un composant optique de formation d'image (20) pour former une image de la scène (80) sur le détecteur (14), un champ de vision de la scène (80) étant défini en partie par le composant optique de formation d'image (20), et

   (ii) un premier composant essentiellement en forme de coin (22) et un deuxième composant essentiellement en forme de coin (24), le premier composant en forme de coin (22) étant associé au premier filtre (26), le deuxième composant en forme de coin (24) étant associé au deuxième filtre (28), chacun des composants en forme de coin (22, 24) ayant un angle au sommet et un indice de réfraction choisis de telle sorte que chacun des composants en forme de coin (22, 24) dévie le rayonnement provenant de la scène (80) d'un angle de déviation qui est approximativement ¼ du champ de vision défini par le composant optique de formation d'image (20), chacun des composants en forme de coin (22, 24) étant positionné de manière fixe à une distance du composant optique de formation d'image (20) supérieure à une distance minimale seuil déterminée selon la formule

   $$\frac{D}{2\tan\left(\frac{\theta}{2}\right)}$$

   , où D est le diamètre d'ouverture du composant optique de formation d'image (20) et θ est le champ de vision défini par le composant optique de formation d'image (20), chacun des composants en forme de coin (22, 24) dirigeant le rayonnement provenant du champ de vision de la scène (80) à travers le composant optique de formation d'image (20) sur le détecteur (14) de telle sorte que le rayonnement est imagé séparément et simultanément sur les première et deuxième régions de détecteur (14a, 14b) à travers un nombre f du système optique (18) inférieur à environ 1,5, chacune des deux images de scène formées sur chacune des régions de détecteur (14a, 14b) incluant un rayonnement dans une bande de longueurs d'onde respective.

2. Dispositif (1) selon la revendication 1, dans lequel chacun des premier et deuxième filtres (26, 28) est un filtre passe-bande.

3. Dispositif (1) selon la revendication 1, dans lequel le premier filtre (26) est disposé sur une parmi une première surface (22a) ou une deuxième surface (22b) du premier composant en forme de coin (22), et le deuxième filtre (28) est disposé sur une parmi une première surface (24a) ou une deuxième surface (24b) du deuxième composant en forme de coin (24).

4. Dispositif (1) selon la revendication 3, dans lequel la première surface (22a) du premier composant en forme de coin (22) est une surface la plus proche du premier composant en forme de coin (22) par rapport au composant optique de formation d'image (20), et la première surface (24a) du deuxième composant en forme de coin (24) est une surface la plus proche du deuxième composant en forme de coin (24) par rapport au composant optique de formation d'image (20), et la deuxième surface (22b) du premier composant en forme de coin (22) est une surface la plus proche du premier composant en forme de coin (22) par rapport à la scène (80), et la deuxième surface (24b) du deuxième composant en forme de coin (24) est une surface la plus proche du deuxième composant en forme de coin (24) par rapport à la scène (80).

5. Dispositif (1) selon la revendication 1, dans lequel un matériau antiréfléchissant est disposé sur au moins une parmi une première surface (22a) et une deuxième surface (22b) du premier composant en forme de coin (22), et sur au moins une parmi une première surface (24a) et une deuxième surface (24b) du deuxième composant en forme de coin (24).

6. Dispositif (1) selon la revendication 1, dans lequel les premier et deuxième composants en forme de coin (22, 24) sont disposés de manière essentiellement symétrique par rapport à un trajet optique de rayonnement.

7. Dispositif (1) selon la revendication 1, dans lequel chacun des premier et deuxième composants en forme de coin (22, 24) est orienté selon un angle respectif par rapport à un trajet optique de rayonnement provenant de la scène (80) vers le détecteur (14).

8. Dispositif (1) selon la revendication 1, dans lequel la présence des premier et deuxième composants en forme de coin (22, 24) résulte en un champ de vision vertical approximativement divisé par deux par rapport à un champ de vision du dispositif (1) défini par le composant optique de formation d'image (20).

FIG. 1

FIG. 2

FIG. 3A

FIG. 3B

FIG. 4

EP 3 414 537 B1

FIG. 5

EP 3 414 537 B1

14

14b

14c

32

14a

FIG. 6A

14

14b-1

14b

14c-1

14c

14c-2

32

14a

14a-1

FIG. 6B

Image Acquisition Electronics
50

ADC
52

Processor
54

Storage Medium
56

Detector Array
14

FIG.7

FIG. 8

900

901 – Point device at external blackbody source at fixed temperature $T_F$

902 – Set chamber to temperature $T_0$ and wait for stabilization

904 – Measure the scene pixel signal and blind pixel signal

906 – Set chamber to subsequent temperature and wait for stabilization

908 – Measure the scene pixel signal and blind pixel signal

910 – Subtract scene pixel signal of 904 from scene pixel signal of 908 to produce scene pixel signal difference, and subtract blind pixel signal of 904 from blind pixel signal of 908 to produce blind pixel signal difference

912 – Additional chamber temperature?

yes

no

914 – Plot the scene pixel signal differences as function of the blind pixel signal differences for each chamber temperature

916 – Determine correlation function between scene pixel signal differences and blind pixel signal differences

918 – Store correlation in storage medium

FIG. 9

EP 3 414 537 B1

1000

1002 – Measure and store scene pixel signal at initial time $t_0$

1004 – Measure blind pixel signal at time $t_0$

1006 – Measure scene pixel signal at subsequent time $t_S$

1008 – Measure blind pixel signal at subsequent time $t_S$

1010 – Determine change in scene pixel signal between $t_0$ and $t_S$ based on previously stored correlation between scene pixel signal differences and blind pixel differences

1012 – Subtract the scene pixel signal change determined in step 1010 from the scene pixel signal measured at time $t_S$

1014 – Detect gas and gas path concentration using result of 1012

1016 – Additional scene pixel measurement?

yes

no

1018 – end operation

FIG. 10

FIG. 11A

$T_E$

$T_{BB}$

$S_B$

Signal Counts

Temperature

Time (t)

FIG. 11B

**REFERENCES CITED IN THE DESCRIPTION**

**Patent documents cited in the description**

- US 20110002505 A
- US 20010045516 A
- US 20050263682 A